# EUROPEAN PATENT APPLICATION

(11) **EP 4 586 178 A1**
(43) Date of publication of application: **16.07.2025**
(21) Application number: 23924183.9
(22) Date of filing: 15.11.2023
(51) Int. Cl.: G06Q 50/06, G06Q 50/10

(54) **INFORMATION PROCESSING METHOD, INFORMATION PROCESSING DEVICE, AND INFORMATION PROCESSING SYSTEM**

(30) Priority: 24.02.2023 JP 2023027822
(71) Applicant: GreenBank Corporation, Nagoya-shi, Aichi 451-0045 (JP)
(72) Inventor: SUKIGARA Shigeki, Nagoya-shi, Aichi 451-0045 (JP)
(74) Representative: Scott, Stephen John
(86) International application number: PCT/JP2023/041141
(87) International publication number: WO 2024/176539

(57) **Abstract**

An information processing method is for an information processing apparatus (3) including a controller (31). The controller (31) executes processing including acquiring first positional information from the memory upon detecting the occurrence of a power outage, the first positional information indicating positions of a plurality of storage cells, identifying a power outage area based on detected power outage information, identifying a user located in the power outage area, and transmitting, to a communication terminal of the user, route information to a usable storage cell selected from the plurality of storage cells based on the first positional information.

## Description

### CROSS-REFERENCE TO RELATED APPLICATION

The present application claims priority to Japanese Patent Application No. 2023-027822 filed on February 24, 2023, the entire contents of which are incorporated herein by reference.

### TECHNICAL FIELD

The present disclosure relates to an information processing method, an information processing apparatus, and an information processing system.

### BACKGROUND

Patent literature (PTL) 1 discloses a method of presenting information to a user of an electric vehicle, such as an electrically assisted bicycle, by displaying, on an information terminal, candidate battery stations that store replacement battery packs. In this method, battery stations in the area desired by the user are displayed on the user's information terminal. PTL 2 discloses a mobile phone charging apparatus that charges the mobile phones of evacuees at public evacuation sites during a disaster. Upon detecting a power outage, this mobile phone charging apparatus can connect the circuit between a charger and a storage cell and charge the mobile phone from the storage cell.

### CITATION LIST

### Patent Literature

PTL 1: JP 7117503 B2
PTL 2: JP 2014-233143 A

### SUMMARY

### (Technical Problem)

However, the subject matter in PTL 1 targets only people who own a predetermined battery pack, leaving room for improvement from the perspective of guiding people who do not normally use that battery pack to a charging spot quickly and reliably in the event of a power outage due to a disaster. The subject matter in PTL 2 can charge the mobile phones of evacuees who arrive at an evacuation site during a disaster, but cannot properly guide users who are outside the evacuation site and need to charge their mobile phones to the evacuation site. In particular, when a user is traveling, it is difficult to guide the user to an evacuation site where charging is possible.

It is an aim of the present disclosure to provide a method, an information processing apparatus, and an information processing system that quickly and reliably guide users to a usable storage cell when a power outage occurs.

### (Solution to Problem)

According to the present disclosure, (1) an information processing method is an information processing method for an information processing apparatus including a memory and a controller and connected to a storage cell over a communication network, wherein the controller executes processing including acquiring first positional information from the memory upon acquiring power outage information indicating occurrence of a power outage, the first positional information indicating positions of a plurality of storage cells; identifying a power outage area based on the power outage information; identifying a user located in the power outage area; and transmitting, to a communication terminal of the user, route information to a guidance destination storage cell that is a usable storage cell selected from among the plurality of storage cells.

(2) In the information processing method of (1), the controller may acquire second positional information indicating a position of the user from the communication terminal and generate the route information from the first positional information and the second positional information.

(3) In the information processing method of (1) or (2), the controller may acquire a remaining power amount from the plurality of storage cells, calculate a usable power amount based on the remaining power amount, and select the guidance destination storage cell based on the usable power amount.

(4) In the information processing method of (3), the controller may have an estimated power consumption per user set in advance, and may determine, for each storage cell in the plurality of storage cells, a count of guidable users representing a count of users who can be guided to the storage cell, so that a total of the estimated power consumption does not exceed the usable power amount.

(5) In the information processing method of (3), the storage cell may be configured to have an estimated power consumption per user set in advance, and to determine, for the storage cell, a count of guidable users representing a count of users who can be guided to each storage cell, so that a total of the estimated power consumption does not exceed the usable power amount, and the controller may acquire the count of guidable users from the storage cell.

(6) In the information processing method of (4) or (5), the controller may identify a closest storage cell that is closest to the user from among the plurality of storage cells based on the first positional information and second positional information indicating a position of the user, and determine the closest storage cell as the guidance destination storage cell in a case in which a count of guided users representing a count of users who have been guided to the closest storage cell is less than the count of guidable users of the closest storage cell.

(7) In the information processing method of (1), the storage cell may be configured to be connected to a power grid, and upon interruption of a power supply from the power grid, generate the power outage information by determining that a power outage has occurred in an area where the storage cell is located, and the controller may acquire the power outage information from the plurality of storage cells.

(8) In the information processing method of (1), the controller may calculate a usable power amount in the entire power outage area from a total of the remaining power amount acquired from storage cells installed in the power outage area among the plurality of storage cells.

(9) In the information processing method of (2), the controller may calculate a count of users in the power outage area from a count of pieces of the second positional information included in the power outage area.

According to the present disclosure, (10) an information processing apparatus includes a controller configured to execute processing including acquiring first positional information from a memory upon acquiring power outage information indicating occurrence of a power outage, the first positional information indicating positions of a plurality of storage cells; identifying a power outage area based on the power outage information; identifying a user located in the power outage area; and transmitting, to a communication terminal of the user, route information to a guidance destination storage cell that is a usable storage cell selected from among the plurality of storage cells.

According to the present disclosure, (11) an information processing system is an information processing system including a storage cell and an information processing apparatus that can communicate with the storage cell, wherein the information processing apparatus includes a memory and a controller, and the controller is configured to execute processing including acquiring first positional information from the memory upon acquiring power outage information indicating occurrence of a power outage, the first positional information indicating positions of a plurality of storage cells, identifying a power outage area based on the power outage information, identifying a user located in the power outage area, and transmitting, to a communication terminal of the user, route information to a guidance destination storage cell that is a usable storage cell selected from among the plurality of storage cells, and the storage cell is configured to transmit the remaining power amount to the information processing apparatus.

### (Advantageous Effect)

According to an embodiment of the present disclosure, a user can be quickly and reliably guided to a usable storage cell when a power outage occurs.

### BRIEF DESCRIPTION OF THE DRAWINGS

In the accompanying drawings:
FIG. 1 illustrates an example configuration of an information processing system in an embodiment;
FIG. 2 is a block diagram illustrating an example configuration of the server apparatus in FIG. 1;
FIG. 3 is a block diagram illustrating an example configuration of the storage cell in FIG. 1;
FIG. 4 is a block diagram illustrating an example configuration of the user terminal in FIG. 1;
FIG. 5 is a sequence diagram illustrating an example of operations of the information processing system in FIG. 1;
FIG. 6 is a table illustrating an example of storage of first positional information and area correspondence information in the information processing system in FIG. 1;
FIG. 7 is a flowchart illustrating an example of operations when the user terminal in FIG. 1 generates second positional information;
FIG. 8 is a diagram illustrating an example of a pop-up, displayed by the information processing system in FIG. 1, to confirm provision of positional information;
FIG. 9 is a diagram illustrating an example of route guidance by the information processing system in FIG. 1; and
FIG. 10 is a flowchart illustrating an example of operations of the server apparatus in FIG. 1.

### DETAILED DESCRIPTION

An embodiment of the present disclosure is now described with reference to the drawings. Portions having an identical configuration or function in the drawings are labeled with the same reference signs. In the explanation of the present embodiment, a redundant description of identical portions may be omitted or simplified as appropriate.

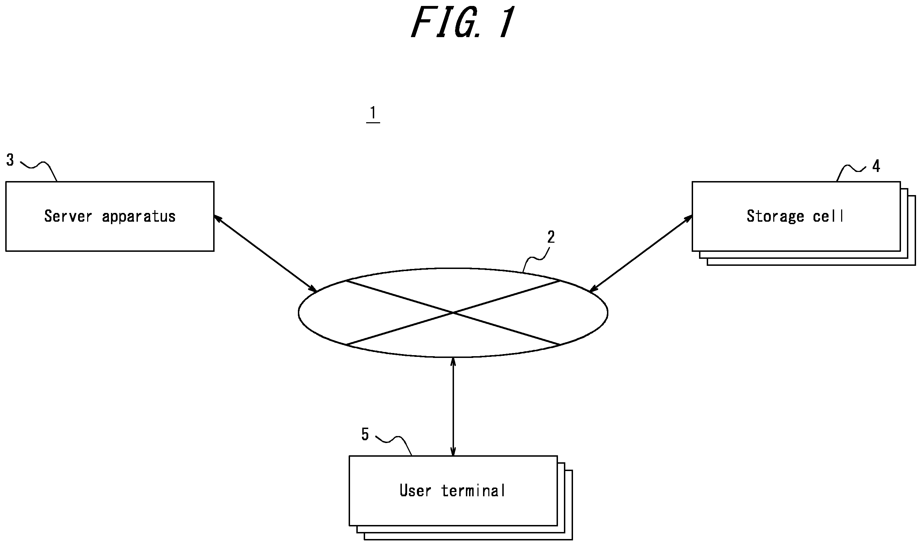

As illustrated in FIG. 1, an information processing system 1 includes a server apparatus 3, storage cells 4, and user terminals 5 that can communicate with each other via a network 2. The network 2 includes the Internet, a mobile communication network, or the like. The server apparatus 3 is an information processing apparatus. The user terminal 5 is a communication terminal of a user.

### (Configuration of Server Apparatus 3)

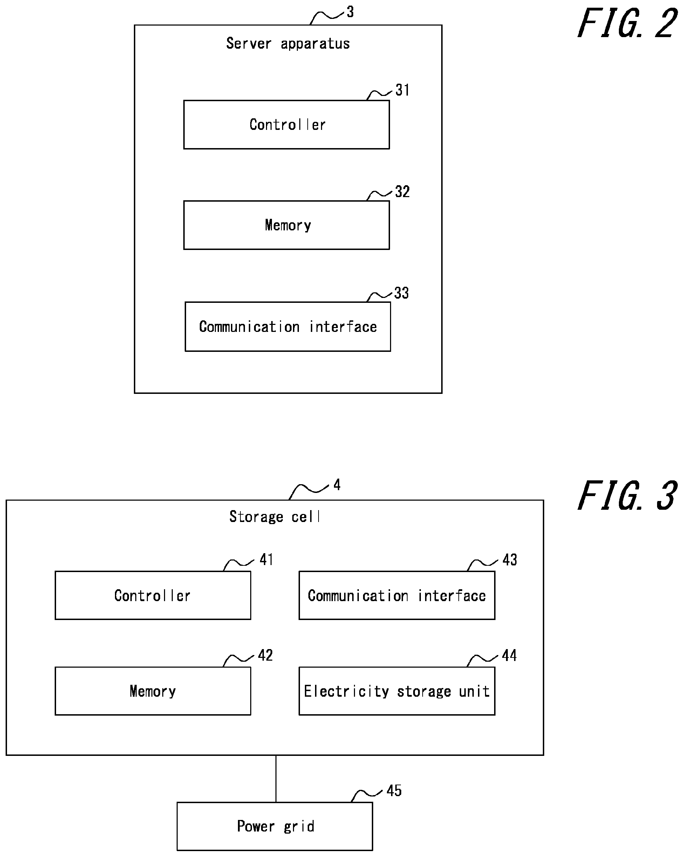

The server apparatus 3 is described below with reference to FIG. 2. The server apparatus 3 is an apparatus that collects and processes information from the storage cell 4 and the user terminal 5 and transmits such information to the storage cell 4 and user terminal 5. The server apparatus 3 includes a controller 31, a memory 32, and a communication interface 33. The server apparatus 3 is, for example, a general-purpose computer such as a work station (WS) or a personal computer (PC) installed in a facility such as a data center, or the server apparatus 3 may be realized by a dedicated electronic device.

The controller 31 includes at least one processor, at least one dedicated circuit, or a combination thereof. The processor may, for example, be a general-purpose processor, such as a central processing unit (CPU) or graphics processing unit (GPU), or a dedicated processor specialized for particular processing.

The memory 32 includes at least one semiconductor memory, at least one magnetic memory, at least one optical memory, or a combination of at least two of these. The memory 32 functions as, for example, a main memory, an auxiliary memory, or a cache memory. For example, the memory 32 stores programs and data to be used for operation of the server apparatus 3 and data resulting from operation of the server apparatus 3. The information stored in the memory 32 may, for example, be updated with information acquired from the network 2 via the communication interface 33.

Storage cell information and user information are further stored in the memory 32. The storage cell information includes positional information for the storage cells, area correspondence information, and the remaining power amount and usable power amount for each storage cell. The user information includes positional information for the user. The storage cell information may be stored in the memory 42. The area correspondence information is information that associates the storage cell installation location with the area corresponding to the installation location (the corresponding area). The corresponding areas of storage cells may overlap.

The communication interface 33 includes at least one interface for external communication that connects to the network 2. The interface for external communication may be an interface for wired communication or wireless communication.

Although the server apparatus 3 in FIG. 1 of the present embodiment is not depicted with an input interface and output interface, the server apparatus 3 may further include non-illustrated input and output interfaces. In other words, in addition to receiving (input) and transmitting (output) information via the communication interface 33, the server apparatus 3 may input and output information via an input interface and output interface.

The functions of the server apparatus 3 are implemented by a processor corresponding to the controller 31 executing a program according to the method of the present disclosure. In other words, the functions of the server apparatus 3 are implemented by software. The program causes a computer to function as the server apparatus 3 by causing the computer to execute the operations of the server apparatus 3. In other words, the computer functions as the server apparatus 3 by executing the operations of the server apparatus 3 according to the program.

The program according to the present embodiment can be recorded on a computer readable recording medium. Computer readable recording media include non-transitory computer readable recording media, examples of which are a magnetic recording apparatus, an optical disc, a magneto-optical recording medium, and a semiconductor memory.

### (Configuration of Storage Cell 4)

The storage cell 4 is described below with reference to FIG. 3. The storage cell 4 is a pre-installed fixed storage cell. The storage cell 4 includes a controller 41, a memory 42, a communication interface 43, and an electricity storage unit 44. The storage cell 4 may be connected to a power grid 45. The storage cell 4 may communicate with the server apparatus 3 via the network 2 at all times or at regular intervals. The storage cells 4 may be distributed in various locations.

The controller 41 includes at least one processor, at least one dedicated circuit, or a combination thereof. The processor may be a general-purpose processor, such as a CPU or GPU, or a dedicated processor specialized for particular processing. The controller 41 performs various controls related to the operations of the storage cell 4 and also generates information, such as the remaining power amount, to be transmitted to the server apparatus 3. The controller 41 may control the receiving of power from the power grid 45 and the transmission of power to the power grid 45.

The memory 42 includes at least one semiconductor memory, at least one magnetic memory, at least one optical memory, or a combination of at least two of these. The memory 42 functions as, for example, a main memory, an auxiliary memory, or a cache memory. The memory 42 stores programs and data to be used for operation of the storage cell 4 and data resulting from operation of the storage cell 4, for example. The information stored in the memory 42 may, for example, be updated with information acquired from the network 2 via the communication interface 43.

The memory 42 further stores the remaining power amount of the electricity storage unit 44. The memory 42 may store various information needed by the controller 41 to control the storage cell 4.

The communication interface 43 includes at least one interface for external communication that connects to the network 2. The interface for external communication may be an interface for wired communication or wireless communication. Instead of being provided in the storage cell 4, the communication interface 43 may be connected to the storage cell 4 as an external communication device. The communication interface 43 transmits the remaining power amount of the storage cell 4 to the server apparatus 3 under the control of the controller 41.

The electricity storage unit 44 is made up of at least one secondary battery. The electricity storage unit 44 may include a plurality of battery cells. The electricity storage unit 44 is also referred to as a battery or battery module. The electricity storage unit 44 includes, but is not limited to, a lithium-ion battery. The electricity storage unit 44 may include present and future available storage batteries, including lead-acid batteries, nickel-metal hydride batteries, sodium-sulfur batteries, lithium-sulfur batteries, magnesium batteries, and all solid-state batteries.

### (Configuration of User Terminal 5)

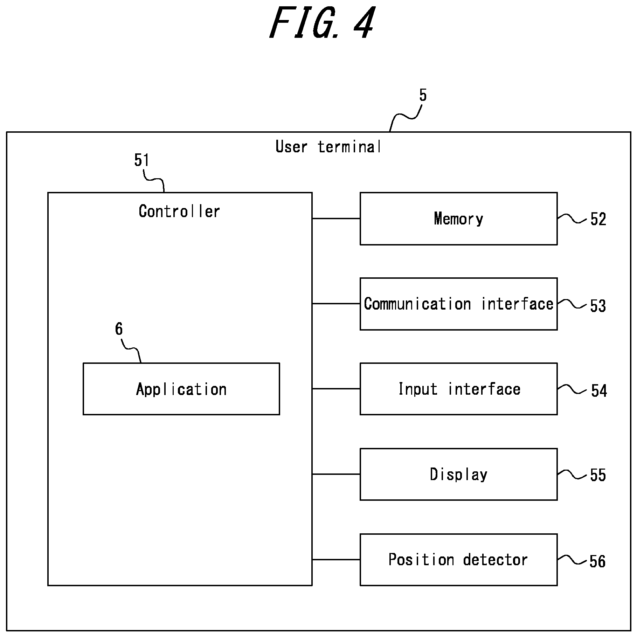

The user terminal 5 is described below with reference to FIG. 4. The user terminal 5 is any electronic apparatus used by the user. The user in the present embodiment is a person who installs the application 6 described below on his or her own user terminal 5 and can receive information on the route to a storage cell when a power outage occurs. The user terminal 5 may be, but is not limited to, a portable information terminal. For example, a general-purpose electronic device such as a smartphone, tablet, or PC, or a dedicated electronic device can be used as the user terminal 5. The user installs the application 6 on the user terminal 5. The application 6 may be a dedicated application or may be provided as one service within another application. The application 6 may be installed on a plurality of terminals. The number of user terminals 5 in the present embodiment is not limited.

The user terminal 5 includes a controller 51, a memory 52, a communication interface 53, an input interface 54, an output interface 55, and a position detector 56.

The controller 51 includes at least one processor, at least one dedicated circuit, or a combination thereof. The controller 51 executes processing related to operations of the user terminal 5 while controlling each component of the user terminal 5.

The memory 52 includes at least one semiconductor memory, at least one magnetic memory, at least one optical memory, or a combination of at least two of these. The memory 52 stores programs and data to be used for operation of the user terminal 5 and data resulting from operation of the user terminal 5, for example. The information stored in the memory 52 may, for example, be updated with information acquired from the network 2 via the communication interface 53. The memory 52 may store data used by the application 6.

The communication interface 53 includes at least one interface for external communication that connects to the network 2. The communication interface 53 receives data for use in operation of the user terminal 5 and transmits data resulting from operation of the user terminal 5 to an external destination (for example, the server apparatus 3). Instead of being provided in the user terminal 5, the communication interface 53 may be connected to the user terminal 5 as an external communication device.

The input interface 54 includes at least one interface for input. The interface for input is, for example, physical keys such as a keyboard, capacitive keys, a pointing device, or a touchscreen integrally provided with a display. The interface for input may, for example, be a microphone that receives audio input, a camera that accepts image input, or the like. The input interface 54 receives an operation for inputting data used in operation of the user terminal 5. Instead of being provided in the user terminal 5, the input interface 54 may be connected to the user terminal 5 as an external input device.

The output interface 55 includes at least one interface for output. The interface for output is, for example, a display that outputs information as images, a speaker that outputs information as audio, or the like. The display may, for example, be a liquid crystal display (LCD) or an organic electro luminescence (EL) display. The output interface 55 outputs data received from the server apparatus 3, data resulting from operation of the user terminal 5, or the like. Instead of being provided in the user terminal 5, the output interface 55 may be connected to the user terminal 5 as an external output device.

The position detector 56 detects the position (for example, the latitude and longitude) of the user terminal 5. For example, the position detector 56 is configured to include a receiver corresponding to a Global Navigation Satellite System (GNSS) such as Global Positioning System (GPS). The GNSS receiver uses signals from satellites to measure the position.

The application 6 displays, on a map, the positional information for a storage cell 4 and route information from the user's current location to the storage cell 4 as received via the communication interface 53 of the user terminal 5, thereby providing the information to the user. The application 6 may control the user terminal 5 to transmit the user's positional information to the server apparatus 3 at regular intervals or continually.

### (Example of Information Processing Method)

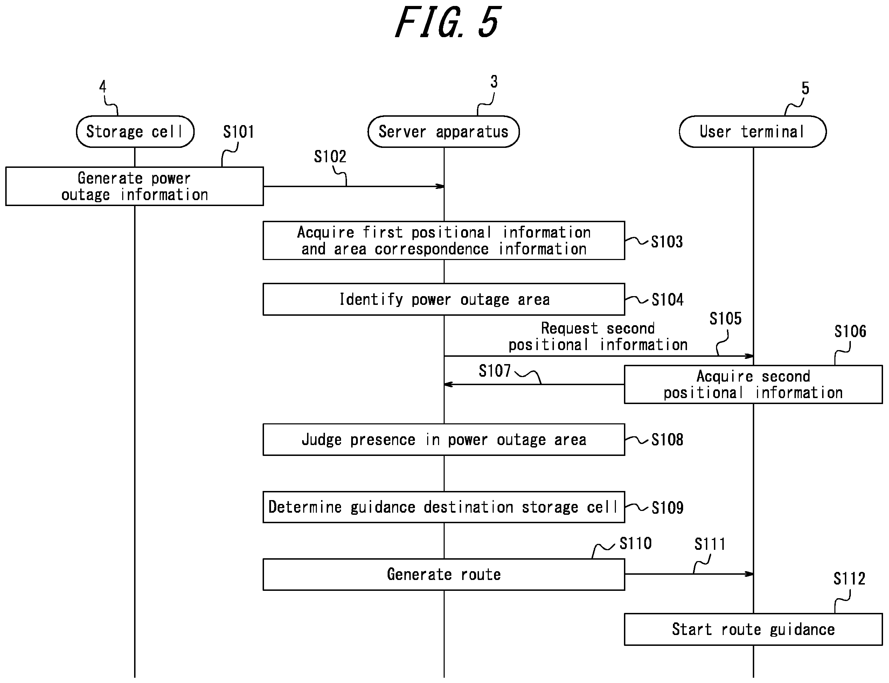

With reference to FIG. 5, an information processing method for the information processing apparatus according to the present embodiment with the above configuration is now described.

Step S101: upon determining that a power outage has occurred, the controller 41 of the storage cell 4 generates power outage information. The condition for the controller 41 to determine that a power outage has occurred can, for example, be set to "interruption of the power supply from the power grid", but this example is not limiting. The power outage information does not have to be generated by the storage cell 4. For example, the server apparatus 3 may monitor for power outage information from the power company, and when the power outage information is issued, the processing from S103 onward may be executed.

Step S102: the communication interface 43 of the storage cell 4 transmits the power outage information generated in S101 to the server apparatus 3.

Step S103: upon receiving the power outage information, the controller 31 of the server apparatus 3 acquires, from the memory 32, the first positional information indicating the positions of the storage cells and the area correspondence information. Here, the first positional information and the area correspondence information are set in advance and stored in the memory 32 of the server apparatus 3. These pieces of information may be stored in the memory 42 of the storage cell 4 and transmitted to the server apparatus 3 together with the power outage information in S102.

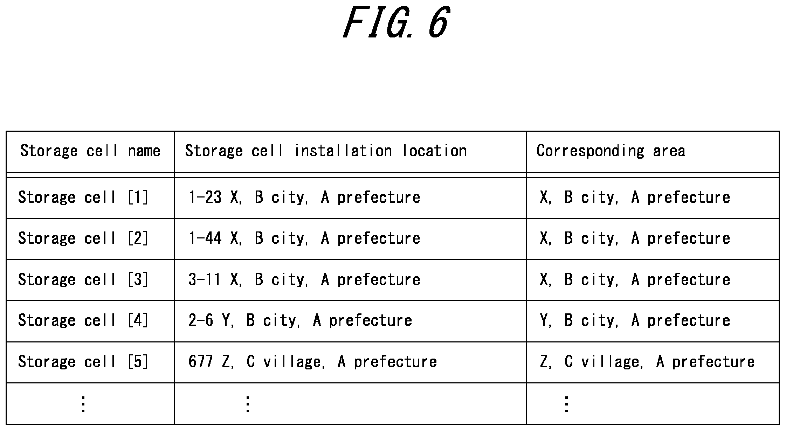

Step S104: the controller 31 identifies the area where the power outage occurred (power outage area) based on the power outage information and the information acquired in S103. Specifically, in the case of receiving the power outage information from the storage cell 4, the controller 31 refers to the first positional information for the storage cell that is the source of the power outage information and the area correspondence information to determine that the area corresponding to the storage cell is the power outage area. In the case of receiving the power outage information from another source, the area where the power outage occurred according to the power outage information may be directly determined to be the power outage area. For example, in a case in which the first positional information and the area correspondence information are stored as illustrated in FIG. 6, and the power outage information is received from storage cells [1] to [3], the controller 31 may determine that a power outage has occurred at X, B city, A prefecture.

To prevent the system from malfunctioning due to some factor other than the storage cell experiencing a power outage, such as storage cell failure or disconnection from the power grid due to external factors, the controller 31 may set a certain threshold and terminate the processing when receiving power outage information from fewer storage cells than the threshold. For example, in a case in which power outage information is not received from any storage cell, among the storage cells whose corresponding area is the area where a power outage supposedly occurred, other than the storage cell that transmitted the power outage information, the controller 31 may consider that the power outage is not a wide area power outage but rather is due to failure or trouble in the storage cell that transmitted the power outage information and may terminate the processing. In the example in FIG. 6, in a case in which the power outage information is received from only storage cell [1], the controller 31 may determine that some trouble has occurred in storage cell [1], rather than a power outage at X, B city, A prefecture. Instead of the above response, the controller 31 may check the power outage information received from the storage cell 4 against the power outage information from the power company, assume that the power outage information received from a storage cell in an area not included in the power outage information from the power company is due to a factor other than a power outage, and terminate the processing.

Step S105: the controller 31 issues a request to the user terminal 5 to transmit second positional information indicating the position of the user.

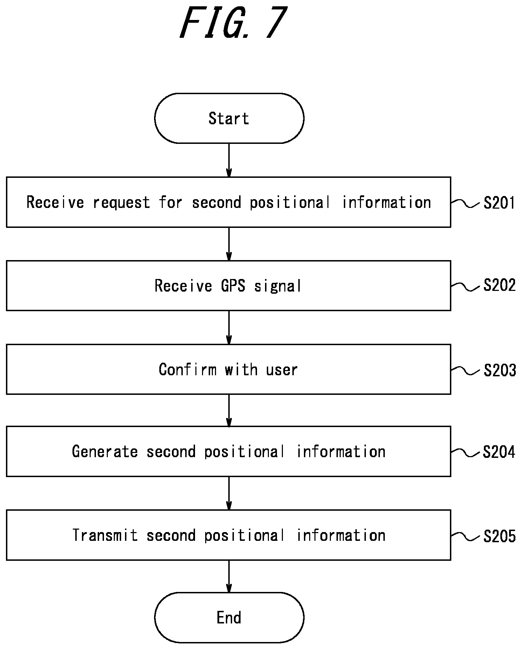

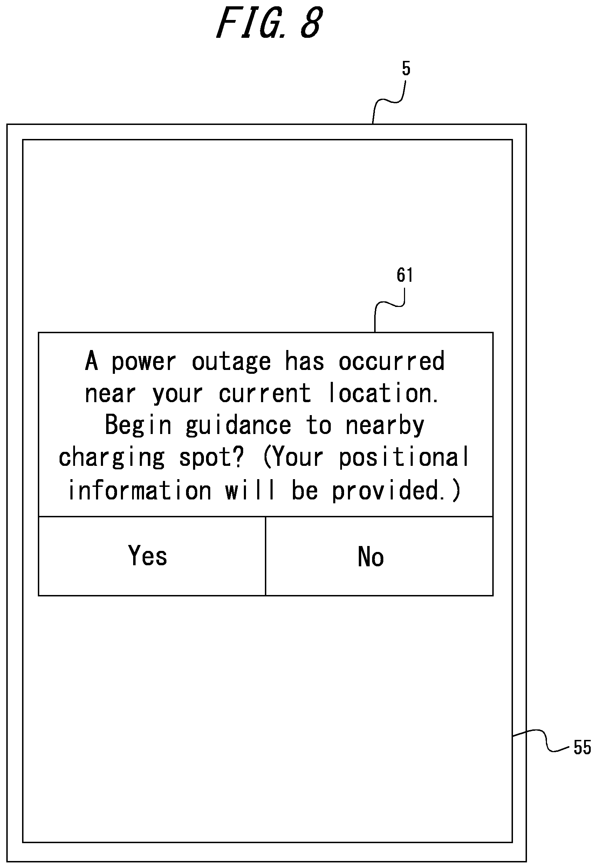

Step S106: upon receiving the request from the server apparatus 3, the application 6 installed on the user terminal 5 operates the user terminal 5 to acquire the second positional information indicating the position of the user. This case is illustrated with reference to FIG. 7. The user terminal 5 receives a request for the second positional information via the communication interface 53 (S201) and receives a GPS signal via the position detector 56 (S202). Upon receiving the GPS signal, the position detector 56 generates the second positional information indicating the position of the user terminal 5 (S204). The position of the user terminal 5 can be considered as the position of the user. Once the second positional information is generated, the user terminal 5 transmits the second positional information to the server apparatus 3 via the communication interface 53 (S205). Before generating the second positional information, the application 6 may output a pop-up 61 or notification on the output interface 55 of the user terminal 5, as illustrated in FIG. 8, to confirm acceptance of the second positional information being generated and transmitted to the server apparatus 3 (S203).

Step S107: the application 6 operates the user terminal 5 to transmit the second positional information to the server apparatus 3.

The application 6 may operate the user terminal 5 to transmit the second positional information to the server apparatus 3 at regular intervals. The controller 31 may consider the last positional information transmitted from the user terminal 5 to be the second positional information, in which case S105 to S107 may be omitted.

Step S108: the controller 31 judges whether the user is in a power outage area based on the second positional information. The power outage area here is not limited to the power outage area identified in S104. For example, a user in an area adjacent to the power outage area identified in S104 may also be determined to be in a power outage area.

The controller 31 may also calculate the number of users in the power outage area from the number of pieces of second positional information included in the power outage area acquired in S108.

Step S109: for the user judged to be in the power outage area in S108, the controller 31 determines the storage cell (guidance destination storage cell) to which the user is to be guided. The guidance destination storage cell is selected through the processing in S301 to S310 described below. The controller 31 may terminate the processing for a user determined to be outside the power outage area in S108.

Step S110: the controller 31 generates route information based on the first positional information and the second positional information. Specifically, the storage cell that is the target of the first positional information is the guidance destination storage cell determined in S109. The route information is the route information from the position of the user to the guidance destination storage cell.

Step S111: the communication interface 33 transmits the route information generated in S110 to the user terminal 5 via the network 2.

Instead of S110 and S111, the communication interface 33 may transmit the first positional information for the guidance destination storage cell to the user terminal 5 of the user judged to be in the power outage area in S108. In this case, the application 6 may generate the route information itself using the second positional information acquired in S106 and the first positional information received from the server apparatus 3.

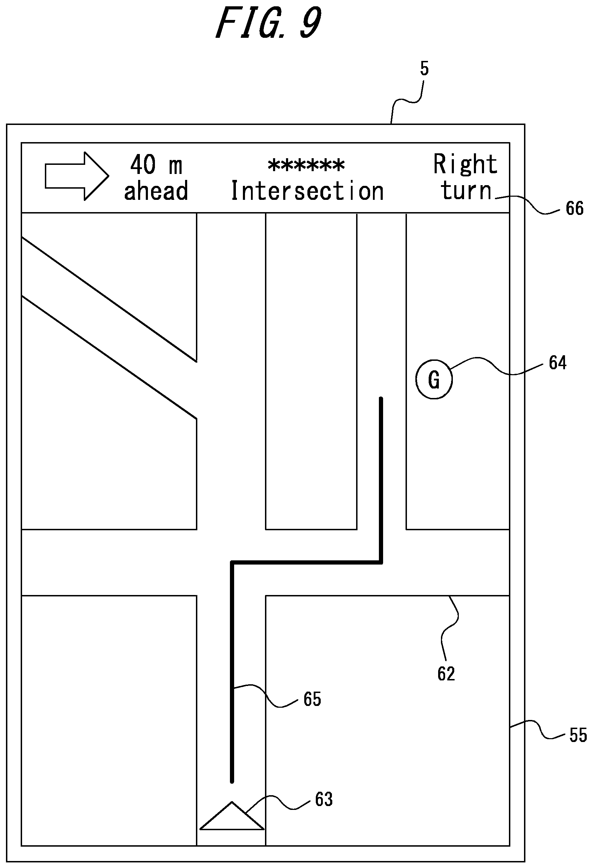

Step S112: upon receiving the route information, the application 6 starts the route guidance. For example, as illustrated in FIG. 9, a map 62 is displayed on the output interface 55, and on the map 62 are displayed a mark 63 indicating the current position of the user, a mark 64 indicating the location of the guidance destination storage cell, and a display 65 indicating the route from the current position of the user to the guidance destination storage cell. A display 66 indicating the route at the next intersection may further be displayed at the top of the map to provide route guidance.

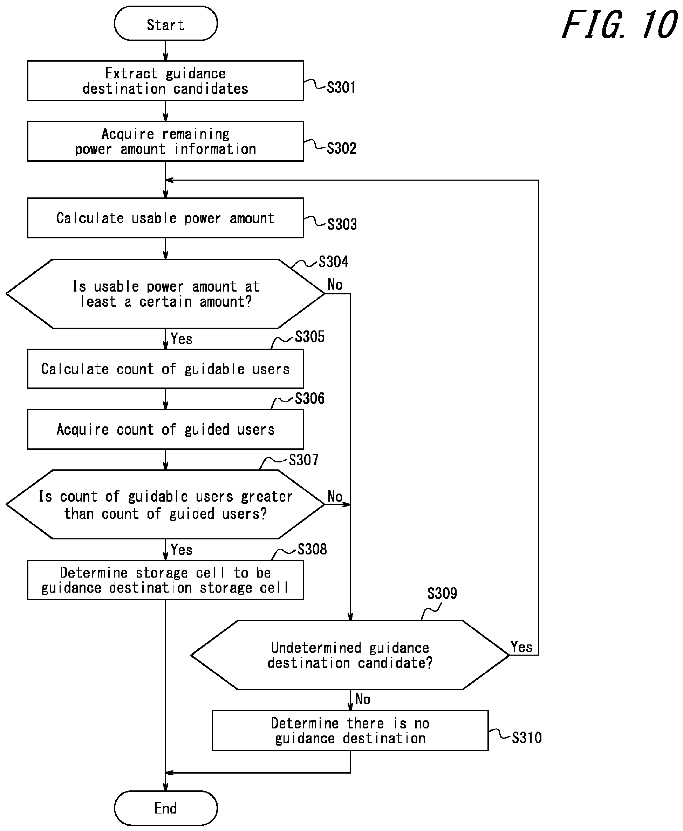

Next, with reference to FIG. 10, the method of determining the storage cell that becomes the guidance destination in S109 is explained.

Step S301: the controller 31 extracts the storage cells 4 installed in the power outage area identified in S101 as guidance destination candidates. The condition for the storage cells to be extracted as guidance destination candidates is not limited to the above condition. For example, storage cells located within a 10-minute walk from the second positional information may be extracted as guidance destination candidates. The condition for the storage cells to be extracted as guidance destination candidates may be changed for each area. For example, in a case of extracting in an area with a low density of installed storage cells (where not many storage cells are installed), a setting may be made also to extract storage cells in neighboring areas, in addition to the power outage area, as guidance destination candidates.

In a case in which the server apparatus 3 and the storage cell 4 communicate continuously or at regular intervals, and communication from a storage cell 4 is interrupted, the controller 31 may query the storage cell 4 a preset number of times, and if there is no response to the queries, the controller 31 may assume that some sort of trouble has occurred in the storage cell and exclude the storage cell from among the guidance destination candidates.

Step S302: the controller 31 acquires remaining power amount information from all of the storage cells extracted in S301.

The controller 31 may calculate the power amount that can be used in the entire power outage area from the remaining power amount information acquired in S302.

Step S303: based on the remaining power amount information of the storage cell 4 received in S302, the controller 31 calculates the usable power amount of the storage battery that is closest to the position indicated by the second positional information received in S103 among the storage batteries for which the possibility of guidance has not yet been determined. Specifically, the usable power amount is the result of subtracting a certain power amount, such as the minimum power amount that does not cause over-discharge, from the remaining power amount.

Step S304: in a case in which the usable power amount does not exceed a certain value, the controller 31 determines that guidance to the storage cell is not possible. For example, the controller 31 may determine that guidance to the storage cell is not possible in a case in which the usable power amount is less than the below-described estimated power consumption per person.

Step S305: the controller 31 calculates a count of guidable users representing a count of users who can be guided to each storage cell 4 based on the usable power amount calculated in S303 and the estimated power consumption. Specifically, the estimated power consumption is the amount of power that each user is expected to use. The estimated power consumption may be stored in advance in the memory 32. The following formula, for example, may be used as the formula for calculating the count of guidable users.
usable power amount [W]/estimated power consumption [W/person] = count of guidable users [number of persons]

The estimated power consumption may be stored in the memory 42 of the storage cell 4, and the calculation of the usable power amount and the count of guidable users may be performed by the controller 41 of the storage cell 4. In this case, in S302, the controller 31 acquires the count of guidable users along with the remaining power amount information from the storage cell closest to the second positional information received in S103 and recalculates and confirms whether the count of guidable users is correct.

Step S306: the controller 31 retrieves, from the memory 32, a count of guided users representing a count of users who have already been guided to the storage cell selected in S303.

Step S307: the controller 31 checks the count of guided users retrieved in S306 against the count of guidable users calculated in S305 to determine whether guidance is possible. Specifically, in a case in which the count of guidable users exceeds the count of guided users, the controller 31 determines that guidance to the storage cell is possible. The controller 31 updates the information on the count of guided users for the guidance destination storage cell and stores the information in the memory 32. In a case in which the count of guided users is equal to or greater than the count of guidable users, it is determined that guidance to the storage cell is not possible.

Step S308: in a case in which it is determined in S307 that guidance to the storage cell selected in S303 is possible, the controller 31 determines the storage cell to be the guidance destination storage cell.

Step S309: in a case in which it is determined in S304 or S307 that guidance to the storage cell selected in S303 is not possible, the controller 31 confirms whether there is a storage cell, among the guidance destination candidate storage cells extracted in S301, for which guidance has not yet been determined. If there is an undetermined storage cell, the processing returns to step S303.

Step S310: in the case of no undetermined storage cell, the controller 31 determines that there is no guidance destination and transmits information to this effect to the user terminal 5. Upon receiving this information, the application 6 installed on the user terminal 5 outputs a notification to the output interface 55 of the user terminal 5 stating, "No available charging spots were found near your current location" and terminates the processing.

According to the present disclosure, a user can quickly and reliably reach a storage cell in the event of a power outage simply by following the extremely simple procedure of installing the application on his or her own electronic terminal. Even if the remaining power amount in the user's electronic device is low, this approach enables the user to continue using the electronic device by recharging it. For example, even if the remaining power amount in the user's mobile phone is low, the user can receive power from the storage cell and inform family members or the like of his or her safety.

The present disclosure is not limited to the above embodiments, and a variety of modifications and changes are possible. For example, the functions or the like included in the various components or steps may be reordered in any logically consistent way. Furthermore, components or steps may be combined into one or divided. For example, the configuration and operations of the server apparatus 3 may be distributed among a plurality of computers and network storage devices that can communicate with each other. For example, some of the configuration and operations of the server apparatus 3 may be provided in the storage cell 4, the user terminal 5, or the like. Such embodiments are also to be understood as falling within the scope of the present disclosure.

### REFERENCE SIGNS LIST

- 1: Information processing system
- 2: Network
- 3: Server apparatus (information processing apparatus)
- 31: Controller
- 32: Memory
- 33: Communication interface
- 4: Storage cell
- 41: Controller
- 42: Memory
- 43: Communication interface
- 44: Electricity storage unit
- 45: Power grid
- 5: User terminal (communication terminal)
- 51: Controller
- 52: Memory
- 53: Communication interface
- 54: Input interface
- 55: Output interface
- 56: Position detector
- 6: Application
- 61: Notification confirming provision of positional information
- 62: Map
- 63: Display indicating current location of user
- 64: Display indicating location of guidance destination storage cell
- 65: Display indicating route from current position of user to guidance destination storage cell
- 66: Display indicating route at next intersection

## Claims

1. An information processing method for an information processing apparatus comprising a memory and a controller and connected to a storage cell over a communication network, wherein the controller executes processing comprising:
acquiring first positional information from the memory upon acquiring power outage information indicating occurrence of a power outage, the first positional information indicating positions of a plurality of storage cells;
identifying a power outage area based on the power outage information;
identifying a user located in the power outage area;
acquiring a remaining power amount from the plurality of storage cells, calculating a usable power amount based on the remaining power amount, and selecting a guidance destination storage cell based on the usable power amount; and
transmitting, to a communication terminal of the user, route information to the guidance destination storage cell based on the first positional information.

2. The information processing method according to claim 1, wherein the controller acquires second positional information indicating a position of the user from the communication terminal and generates the route information from the first positional information and the second positional information.

3. The information processing method according to claim 1 or 2, wherein the controller
has an estimated power consumption per user set in advance, and
determines, for each storage cell in the plurality of storage cells, a count of guidable users representing a count of users who can be guided to the storage cell, so that a total of the estimated power consumption does not exceed the usable power amount.

4. The information processing method according to claim 2, wherein
the storage cell is configured to
calculate the usable power amount based on the remaining power amount of the storage cell,
have an estimated power consumption per user set in advance, and
determine, for the storage cell, a count of guidable users representing a count of users who can be guided to each storage cell, so that a total of the estimated power consumption does not exceed the usable power amount, and
the controller acquires the count of guidable users from the storage cell.

5. The information processing method according to claim 3, wherein the controller
identifies a closest storage cell that is closest to the user from among the plurality of storage cells based on the first positional information and second positional information indicating a position of the user, and
determines the closest storage cell as the guidance destination storage cell in a case in which a count of guided users representing a count of users who have been guided to the closest storage cell is less than the count of guidable users of the closest storage cell.

6. The information processing method according to claim 1, wherein
the storage cell is configured to be connected to a power grid, and upon interruption of a power supply from the power grid, generate the power outage information by determining that a power outage has occurred in an area where the storage cell is located, and
the controller acquires the power outage information from the plurality of storage cells.

7. The information processing method according to claim 1, wherein the controller calculates a usable power amount in the entire power outage area from a total of the remaining power amount acquired from storage cells installed in the power outage area among the plurality of storage cells.

8. The information processing method according to claim 2, wherein the controller calculates a count of users in the power outage area from a count of pieces of the second positional information included in the power outage area.

9. An information processing apparatus comprising a controller configured to execute processing, the processing comprising:
acquiring first positional information from a memory upon acquiring power outage information indicating occurrence of a power outage, the first positional information indicating positions of a plurality of storage cells;
identifying a power outage area based on the power outage information;
identifying a user located in the power outage area;
acquiring a remaining power amount from the plurality of storage cells, calculating a usable power amount based on the remaining power amount, and selecting a guidance destination storage cell based on the usable power amount; and
transmitting, to a communication terminal of the user, route information to the guidance destination storage cell based on the first positional information.

10. An information processing system comprising a storage cell and an information processing apparatus that can communicate with the storage cell, wherein
the information processing apparatus comprises a memory and a controller,
the controller is configured to execute processing comprising
acquiring first positional information from the memory upon acquiring power outage information indicating occurrence of a power outage, the first positional information indicating positions of a plurality of storage cells,
identifying a power outage area based on the power outage information,
identifying a user located in the power outage area,
acquiring a remaining power amount from the plurality of storage cells, calculating a usable power amount based on the remaining power amount, and selecting a guidance destination storage cell based on the usable power amount, and
transmitting, to a communication terminal of the user, route information to the guidance destination storage cell based on the first positional information, and
the storage cell is configured to transmit the remaining power amount to the information processing apparatus.
